# EUROPÄISCHE PATENTSCHRIFT

(11) **EP 2 420 134 B1**
(45) Veröffentlichungstag und Bekanntmachung des Hinweises auf die Patenterteilung: **25.11.2015**
(21) Anmeldenummer: 11173541.1
(22) Anmeldetag: 12.07.2011
(51) Int. Cl.: A01K 1/01

(54) **Vorrichtung zum Reinigen eines Bodens, insbesondere des Bodens einer Kotgrube unterhalb eines Rostbodens für Nutztiere**
Device for cleaning a floor, in particular the floor of a sanitary area underneath a bottom grill for livestock
Dispositif de nettoyage d'un sol, notamment du sol d'une fosse à excréments sous le plancher en grilles destiné à du bétail

(30) Priorität: 21.08.2010 DE 102010035090
(43) Veröffentlichungstag der Anmeldung: 22.02.2012
(73) Patentinhaber: Sieve, Gregor, 49393 Lohne (DE)
(72) Erfinder: Sieve, Gregor, 49393 Lohne (DE)
(74) Vertreter: Jabbusch, Matthias

(56) Entgegenhaltungen:
- DE-A1- 1 912 755
- DE-A1- 2 025 417
- DE-A1- 2 400 321

## Beschreibung

Die Erfindung betrifft eine Vorrichtung zum Reinigen eines Bodens, insbesondere des Bodens einer Kotgrube unterhalb eines Rostbodens für Nutztiere, umfassend wenigstens ein über den Boden führbares Schiebeelement.

Nutztiere werden in Stallungen gehalten, deren Boden regelmäßig in zwei Ebenen ausgebildet ist. Die Nutztiere stehen direkt auf einem Rostboden auf, welcher Durchlässe für die Exkremente der Nutztiere aufweist. Diese Exkremente fallen durch den Rostboden hindurch und sammeln sich auf einem zweiten Boden unterhalb des Rostbodens. Dieser untere Boden kann Teil einer Kotgrube sein.

Auch um die Belastung der Nutztiere durch aus den Exkrementen austretende Gase so gering wie möglich zu halten, ist der Boden, auf den die Exkremente auftreffen, regelmäßig zu reinigen. Die Feststoffe der Exkremente sind wegzunehmen, dafür sind im Stand der Technik bereits Schiebeelemente vorgeschlagen worden. Bei diesen Schiebeelementen kann es sich im einfachsten Fall um manuell zu führende Schiebeelemente nach Art eines Schneeschiebers handeln.

Eine Vorrichtung zum Reinigen des Bodens gemäß dem ersten Teil der Anspruchs 1 ist aus der DE-A-1 912 755 bekannt.

Der Erfindung liegt die Aufgabe zu Grunde, eine Vorrichtung der eingangs genannten Gattung aufzuzeigen, mit der ein rationelles Reinigen des Bodens ermöglicht ist. Zudem soll durch die Reinigungsvorrichtung im Wesentlichen kein Bodenraum in Anspruch genommen werden.

Diese Aufgabe wird durch die Merkmale des zweiten Teils des Anspruchs 1 gelöst.

Bei der erfindungsgemäßen Vorrichtung ist das Schiebeelement maschinell geführt. Es liegt auf dem Boden auf, dabei ist es an zwei strangförmigen Schuborganen gehalten. Auf die Schuborgane werden Schub- bzw. Zugkräfte aufgebracht, welche über das Schuborgan auf das Schiebeelement übertragen werden. Mit den Schuborganen kann somit das Schiebeelement über den Boden beispielsweise eines Stalls geschoben werden, das Schubelement kann durch das Einleiten einer entgegenwirkenden Kraft auch ein Zurückziehen des Schiebeelementes beispielsweise in eine Ausgangsposition bewirken.

Die Schub- und Zugkräfte werden von der Krafteinrichtung aufgebracht. Erfindungsgemäß ist vorgesehen, dass die Krafteinrichtung außerhalb des zu reinigenden Bodens angeordnet ist. Dadurch wird von der Krafteinrichtung kein Bodenraum in Anspruch genommen, ein Verschmutzen der Krafteinrichtung durch herabfallende Exkremente ist vorteilhaft verhindert. Schiebeelement und Schuborgane können dagegen so ausgebildet werden, dass ihre Funktionsweise durch einen Belag mit Exkrementen nicht gefährdet ist.

Das Schiebeelement als Räumschild ausgebildet ist. Mit dem Schiebeelement können dadurch insbesondere feste Exkremente weggeschoben werden, ein Räumschild kann die erforderliche robuste Ausbildung haben, darüber hinaus ist es leicht reinigbar.

Gemäß der Erfindung sind zwei Schuborgane vorgesehen, an deren freien Enden das Schiebeelement gehalten ist. Die Schuborgane selbst können freien Enden des Schiebeelementes zugeordnet sein.

Vorzugsweise ist jedes Schuborgan eine Gliederkette. Über eine Gliederkette können bei entsprechender Begrenzung ihrer Durchbiegbarkeit Schub- und Zugkräfte übertragen werden. Ist die Durchbiegbarkeit der Kette nur in eine Richtung begrenzt, so dass sie in diese Richtung maximal einen gestreckten Strang ausbilden kann, so kann sich die Kette doch in anderer Richtung aufrollen. Die Gliederketten als Schuborgane sind somit in kompakter Weise aufrollbar, für ein Verschieben des Schiebeelementes können sie entsprechend abgerollt werden.

Als Krafteinrichtung ist dabei vorzugsweise ein Elektromotor vorgesehen, andere Krafteinrichtungen sind natürlich möglich.

Zur weiteren Ausbildung der Erfindung sieht eine Weiterbildung vor, dass die Krafteinrichtung in einem längs des Bodens verfahrbaren Chassis gehalten ist. Das Chassis mit der Krafteinrichtung befindet sich außerhalb des Bodens, beispielsweise außerhalb eines Stalls. Es kann längs des zu reinigenden Bodens verfahren werden, ein Verfahren kann beispielsweise immer dann erfolgen, wenn mit dem Schiebeelement eine Reinigung des gerade angefahrenen Bereiches abgeschlossen ist. Der Boden des Stalls kann somit für eine Reinigung in mehrere streifenförmige Sektoren aufgeteilt werden, über welche das Schiebeelement nacheinander verschoben wird.

Zum Einleiten der Kraft in die Schuborgane ist vorzugsweise vorgesehen, dass das Chassis eine von der Krafteinrichtung beaufschlagte Welle trägt, die auf zumindest ein Schuborgan kraftübertragend einwirkt. Die vorgesehene Welle kann beispielsweise mit der Welle des Elektromotors kraftschlüssig verbunden sein, am gegenüberliegenden Ende kann auf die von der Krafteinrichtung beaufschlagte Welle ein Zahnrad aufgebracht sein, welches ein als Kette ausgebildetes Schuborgan kämmt.

Neben der Krafteinrichtung kann das Chassis Aufnahmeeinrichtungen für Abschnitte zumindest eines Schuborgans tragen, beispielsweise Aufwickeleinrichtungen für als Ketten ausgebildete Schuborgane.

Zur weiteren Ausbildung der Erfindung kann noch vorgesehen sein, dass auf dem Chassis zumindest ein Tank für ein Desinfektionsmittel angeordnet ist, der über eine Leitung mit an dem Schiebeelement angeordnete Düsen mittelleitend verbunden ist. Während der Reinigung kann über die Düsen des Schiebeelementes ein Desinfektionsmittel auf die zu reinigenden Bereiche aufgebracht werden. Über die Düsen können gegebenenfalls auch andere Mittel übertragen werden, beispielsweise Reinigungsmittel. Die Düsen können dabei als Hochdruckdüsen ausgebildet sein, um einen Austritt der zugeführten Flüssigkeit mit hohem Druck zu ermöglichen.

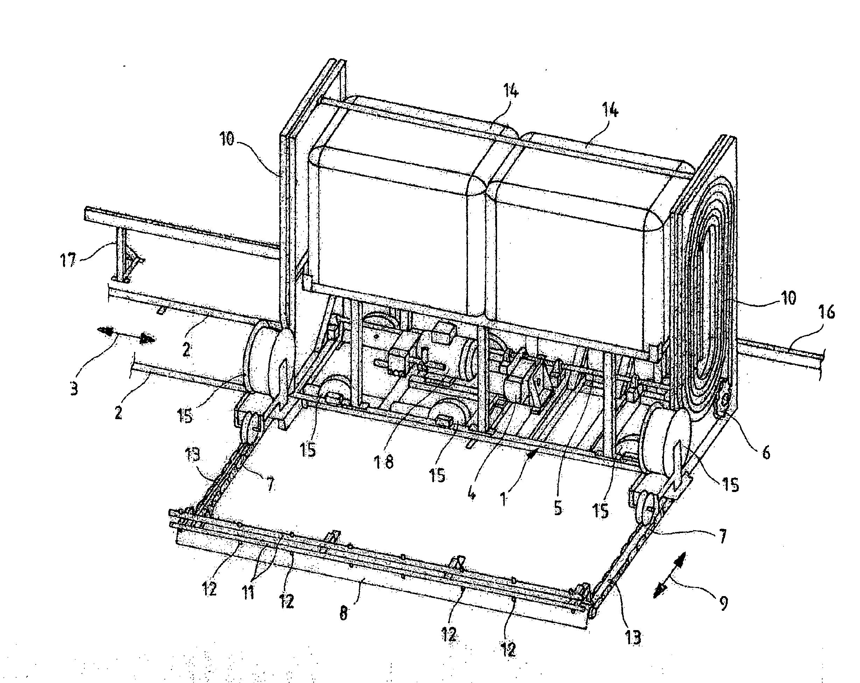

Ein Ausführungsbeispiel der Erfindung, aus dem sich weitere erfinderische Merkmale ergeben, ist in der Zeichnung dargestellt. Die Zeichnung zeigt eine perspektivische Ansicht einer erfindungsgemäßen Vorrichtung zum Reinigen eines Bodens.

Die in der Figur gezeigte Vorrichtung weist ein aus Profilen zusammengesetztes Chassis 1 auf. Das Chassis 1 ist auf Schienen 2 entlang des Doppelpfeils 3 verfahrbar. Das Chassis 1 trägt einen Elektromotor 4, welcher über eine Welle 5 und ein Zahnrad 6 auf eine Kette 7 einwirkt. Auch auf eine zweite Kette 7 kann gegebenenfalls über den Elektromotor 4 eingewirkt werden.

An den freien Enden der Ketten 7 ist ein Räumschild 8 angeordnet. Mit den Ketten 7 kann dieses Räumschild 8 entlang des Doppelpfeils 9 über den Boden beispielsweise eines Stalls verschoben werden. Nicht auf dem Boden aufliegende Abschnitte der Kette 7 werden in Aufwickeleinrichtungen 10 auf dem Chassis 1 aufgenommen.

Dem Räumschild 8 sind von Verteilleitungen 11 abzweigende Düsen 12 zugeordnet. Die Verteilleitungen 11 sind auf der Oberkante des Räumschildes 8 über die gesamte Länge des Räumschildes 8 angeordnet. Die Verteilleitungen 11 sind über weitere Leitungen 13, welche auf den Gliedern der Ketten 7 aufliegen, mit Flüssigkeitstanks 14 mediumleitend verbunden.

Wird das Räumschild 8 in Richtung des Chassis 1 gezogen, werden die Leitungen 13 von den Gliedern der Ketten 7 abgehoben und in Aufwickeltrommeln 15 aufgenommen. Während dieser Ziehung kann das Räumschild 8 nach oben bewegt, z.B. geklappt, werden. Dann werden keine Exkremente durch das Räumschild 8 in Richtung Chassis 1 befördert. Zum Beaufschlagen der Leitungen 13 mit einer Flüssigkeit unter hohem Druck ist auf dem Chassis 1 ein Hochdruckaggregat für die Medien vorgesehen.

Das Chassis 1 steht über Laufräder 15 auf den Schienen 2 auf. Das Chassis 1 wird auf den Schienen 2 entlang einer Führungsschiene 16 geführt, die Führungsschiene 16 steht über Stützen 17 auf einem Boden außerhalb des zu reinigenden Bodens auf.

Die über den zu reinigenden Boden geführten Bauteile können aus einem Kunststoff gefertigt sein.

## Patentansprüche

1. Vorrichtung zum Reinigen eines Bodens, insbesondere des Bodens einer Kotgrube unterhalb eines Rostbodens für Nutztiere, umfassend wenigstens ein über den Boden führbares Schiebeelement, wobei das Schiebeelement an wenigstens einem strangförmigen Schuborgan gehalten ist und wobei eine auf das strangförmige Schuborgan mit Schub- und Zugkräften einwirkende Krafteinrichtung vorgesehen ist, wobei die Krafteinrichtung außerhalb des zu reinigenden Bodens angeordbar ist,
**dadurch gekennzeichnet,**
**dass** das Schiebeelement als Räumschild (8) ausgebildet ist und dass zwei Schuborgane vorgesehen sind, an deren freien Enden das Schiebeelement gehalten ist.

2. Vorrichtung nach Anspruch 1, **dadurch gekennzeichnet, dass** jedes Schuborgan eine Gliederkette (7) ist.

3. Vorrichtung nach Anspruch 1 oder 2, **dadurch gekennzeichnet, dass** die Krafteinrichtung ein Elektromotor (4) ist.

4. Vorrichtung nach einem der vorhergehenden Ansprüche, **dadurch gekennzeichnet, dass** die Krafteinrichtung in einem längs des Bodens verfahrbaren Chassis (1) gehalten ist.

5. Vorrichtung nach Anspruch 4, **dadurch gekennzeichnet, dass** das Chassis (1) eine von der Krafteinrichtung beaufschlagte Welle (5) trägt, die auf zumindest ein Schuborgan kraftübertragend einwirkt.

6. Vorrichtung nach Anspruch 4 oder 5, **dadurch gekennzeichnet, dass** das Chassis (1) wenigstens eine Aufnahmeeinrichtung für Abschnitte zumindest eines Schuborgans trägt.

7. Vorrichtung nach Anspruch 6, **dadurch gekennzeichnet, dass** die Aufnahmeeinrichtung als Aufwickeleinrichtung (10) ausgebildet ist.

8. Vorrichtung nach einem der Ansprüche 4 bis 7, **dadurch gekennzeichnet, dass** auf dem Chassis (1) zumindest einen Tank (14) für ein Desinfektionsmittel angeordnet ist, der über eine Leitung (13) mit an dem Schiebeelement angeordneten Düsen (12) mittelleitend verbunden ist.

## Claims

1. An apparatus for cleaning a floor, in particular the floor of a sanitary area underneath a bottom grill for livestock comprising at least one sliding element which is guidable over the floor, wherein the sliding element is held on at least one string-shaped push member, and wherein a power means exerting push and pull forces upon the string-shaped push member is provided, wherein the power means can be arranged outside the floor to be cleaned,
**characterised in that**
the sliding element is configured as a clearing blade (8) and **in that** two push members are provided, at the free ends of which the sliding element is held.

2. The apparatus according to claim 1, **characterised in that** each push member is a link chain (7).

3. The apparatus according to claim 1 or 2, **characterised in that** the power means is an electric motor (4).

4. The apparatus according to one of the preceding claims, **characterised in that** the power means is held in a chassis (1) which can be moved along the floor.

5. The apparatus according to claim 4, **characterised in that** the chassis (1) supports a shaft (5) acted upon by the power means, which shaft bears upon at least one push member in a power-transmitting manner.

6. The apparatus according to claim 4 or 5, **characterised in that** the chassis (1) supports at least one receptacle for sections of at least one push member.

7. The apparatus according to claim 6, **characterised in that** the receptacle is configured as a wind-up means (10).

8. The apparatus according to one of claims 4 to 7, **characterised in that** the chassis (1) has at least one reservoir (14) for holding a disinfectant, which reservoir is connected via a line (13) conducting the disinfectant to nozzles (12) arranged on the sliding element.

## Revendications

1. Dispositif destiné à nettoyer un sol, notamment le sol d'une fosse à excréments sous un sol en caillebotis pour des animaux domestiques, comprenant au moins un élément coulissant pouvant être guidé par-dessus le sol, l'élément coulissant étant maintenu sur au moins un organe pousseur en forme de boudin et un dispositif de force agissant par des forces de poussées et de traction sur l'organe pousseur en forme de boudin étant prévu, le dispositif de force pouvant être placé en-dehors du sol à nettoyer
**caractérisé en ce que**
l'élément coulissant est conçu en tant que lame de déblayage (8) et ce qu'il est prévu deux organes pousseurs sur les extrémités desquels est maintenu l'élément coulissant.

2. Dispositif selon la revendication 1, **caractérisé en ce que** chaque organe pousseur est une chenille articulée (7).

3. Dispositif selon la revendication 1 ou 2, **caractérisé en ce que** le dispositif de force est un moteur électrique (4).

4. Dispositif selon l'une quelconque des revendications précédentes, **caractérisé en ce que** le dispositif de force est maintenu dans un châssis (1) déplaçable le long du sol.

5. Dispositif selon la revendication 4, **caractérisé en ce que** le châssis (1) porte un arbre (5) soumis au dispositif de force qui agit par transmission de force sur au moins un organe pousseur.

6. Dispositif selon la revendication 4 ou 5, **caractérisé en ce que** le châssis (1) porte au moins un dispositif de réception pour des parties d'au moins un organe pousseur.

7. Dispositif selon la revendication 6, **caractérisé en ce que** le dispositif de réception est conçu en tant que dispositif d'enroulement (10).

8. Dispositif selon l'une quelconque des revendications 4 à 7, **caractérisé en ce que** sur le châssis (1) est placée au moins une citerne (14) pour un produit désinfectant, qui par l'intermédiaire d'un conduit (13) est reliée par conduction de produit avec des buses (12) placées sur l'élément coulissant.
